# EUROPÄISCHE PATENTSCHRIFT

(11) **EP 4 247 767 B1**
(45) Veröffentlichungstag und Bekanntmachung des Hinweises auf die Patenterteilung: **17.01.2024**
(21) Anmeldenummer: 22713299.0
(22) Anmeldetag: 04.02.2022
(51) Int. Cl.: C04B 2/10, C04B 7/43

(54) **VERFAHREN ZUR THERMISCHEN BEHANDLUNG VON FLUGFÄHIGEM ROHMATERIAL**
METHOD FOR THERMAL TREATMENT OF AIR-DISPERSIBLE RAW MATERIAL
PROCÉDÉ DE TRAITEMENT THERMIQUE DE MATIÈRE PREMIÈRE DISPERSIBLE DANS L'AIR

(30) Priorität: 12.02.2021 BE 202105101; 12.02.2021 DE 102021201356
(43) Veröffentlichungstag der Anmeldung: 27.09.2023
(73) Patentinhaber: thyssenkrupp Polysius GmbH, 59269 Beckum (DE); thyssenkrupp AG, 45143 Essen (DE)
(72) Erfinder: LEMKE, Jost, 59320 Ennigerloh (DE); LAMPE, Karl, 59320 Ennigerloh (DE)
(74) Vertreter: thyssenkrupp Intellectual Property GmbH
(86) Internationale Anmeldenummer: PCT/EP2022/052749
(87) Internationale Veröffentlichungsnummer: WO 2022/171540

(56) Entgegenhaltungen:
- WO-A1-2021/023567
- CN-A- 104 819 650
- DE-A1- 2 519 884
- DE-A1-102014 113 127
- DE-A1-102016 211 181
- US-A1- 2016 214 893

## Beschreibung

Die Erfindung betrifft ein Verfahren zur thermischen Behandlung von flugfähigem Rohmaterial, insbesondere Zementrohmehl und/oder mineralischen Produkten, mit einer von Heißgasen durchströmten Leitung und zumindest einem Mittel zur Zugabe des Rohmaterials.

Zur Behandlung von Zementklinker oder Klinkerersatzstoffen (SCMs Supplementary cementitious material) oder Kalk oder Erzen oder Tonen oder anderen mineralischen Produkten werden große Mengen an thermischer Energie benötigt, um das gemahlene Rohmehl zu trocknen und/oder zu calcinieren und/oder zu reduzieren und/oder zu sintern. Hierzu wird das Rohmehl beispielsweise im Flugstrom auf eine benötigte Temperatur erhitzt, bevor es weiterbehandelt wird. Eine nachfolgend beschriebene Leitung mit einem Brennstoffbehandlungsbereich kann in Industriezweigen zum Einsatz kommen, bei denen Rohstoffe thermisch behandelt werden. Beispielhaft sind hier die Zement- und/oder Mineralindustrie genannt.

Beispielsweise zur Herstellung von Zementklinker wird Rohmehl aus gemahlenem kalkhaltigem und silikathaltigem Gestein einer Wärmebehandlung unterzogen, wobei der Kalkstein von CO₂ befreit und in gebrannten Kalk CaO überführt wird. In einem weiteren Schritt wird üblicherweise das durch die CO₂-Befreiung entsäuerte Rohmehl unter Wärmeeinfluss zu verschiedenen Calciumsilikatphasen gesintert.

Bei der Vorcalcinierung (Entsäuerung) wird das aus der zweituntersten Zyklonstufe einer Zyklonvorwärmerkaskade austretende heiße Rohmehl von aus dem Drehrohrofen aufströmendem Heißgas mitgerissen und in einen Calcinator geführt, der zwischen Zyklonvorwärmer und Drehrohrofen angeordnet ist. Dabei handelt es sich üblicherweise um eine Steigleitung, in dem sauerstoffhaltiges Ofengas und Brenngut im Gleichstrom geführt werden und miteinander reagieren. Um die endotherm ablaufende Entsäuerungsreaktion aufrecht zu erhalten, werden im Calcinator Brennstoffe zugegeben.

In der klassischen luftbetriebenen Ofenlinie kann die für die Calcinatorfeuerung erforderliche Verbrennungsluft beispielswiese direkt durch den Drehrohrofen und/oder in einer gesonderten Gasleitung, der sogenannten Tertiärluftleitung, vom Klinkerkühler parallel zum Drehrohrofen zum Calcinator geführt werden.

In einer mit reinem Sauerstoff betriebenen Ofenlinie kann der für die Calcinatorfeuerung erforderliche Sauerstoff beispielswiese direkt durch den Drehrohrofen und/oder in einer gesonderten Gasleitung, der sogenannten Tertiärgasleitung, vom Klinkerkühler parallel zum Drehrohrofen zum Calcinator geführt werden.

Aus der DE 10 2014 113 127 A1 ist eine Anlage zur thermischen Behandlung von Rohmehl bekannt. Insbesondere bei Calcinatoren mit einer reduzierten Steigrohrlänge ist eine gezielte Einstellung der Verbrennung und der daraus resultierenden thermischen Leistung bisher nicht möglich. Aufgrund solcher Leistungsschwankungen sind kürzere Calcinatoren bisher nur bedingt einsetzbar.

Davon ausgehend ist es Aufgabe der vorliegenden Erfindung, eine Anlage und ein Verfahren zur thermischen Behandlung von Rohmaterialien, insbesondere einen Calcinator, bereitzustellen, der geringeren thermischen Leistungsschwankungen unterliegt.

Diese Aufgabe wird erfindungsgemäß durch ein Verfahren mit den Merkmalen des unabhängigen Verfahrensanspruchs 1 gelöst. Vorteilhafte Weiterbildungen ergeben sich aus den abhängigen Ansprüchen.

Ein Verfahren zum zur thermischen Behandlung von flugfähigem Rohmaterial, insbesondere Zementrohmehl und/oder mineralische Produkte, umfasst die Schritte des Verfahrensanspruch 1, darunter:
- Einführen des Rohmaterials in eine von heißen Gasen durchströmte Leitung und
- thermisches Behandeln des Rohmaterials durch die Heißgase und/oder die Strahlungswärme in der Steigleitung (32),
- wenigstens teilweises Umsetzen des Brennstoffs in einem Behandlungsbereich, wobei die in dem Behandlungsbereich erzeugte Wärme zumindest teilweise der Leitung zugeführt wird, und
- Einleiten eines sauerstoffreichen Gases in den Behandlungsbereich,
- Ermitteln des Sauerstoffgehalts in dem Heißgas der Leitung und/ oder der Gastemperatur der Leitung, und
- Steuern/ Regeln der Menge an in den Behandlungsbereich eingeleiteten Sauerstoff in Abhängigkeit der ermittelten Temperatur und/ oder des Sauerstoffgehalts,
- Der ermittelte Sauerstoffgehalt wird mit einem Sauerstoffgehalt-Sollwert verglichen und die Menge an in den Behandlungsbereich eingeleiteter Sauerstoff erhöht, wenn der ermittelte Sauerstoffgehalt den Sauerstoffgehalt-Sollwert überschreitet.

Der Sauerstoffgehalt des Heißgases wird vorzugsweise kontinuierlich ermittelt. Die Heißgase umfassen vorzugsweise aus einem Drehrohrofen einer Zementanlage austretende Heißgase, die in den Eingangsbereich, insbesondere den unteren Bereich der Leitung, eingeführt werden und durch die Leitung strömen. Die Leitung ist eine Steigleitung, insbesondere ein Steigrohr, das sich im Wesentlichen vertikal erstreckt und von dem Drehrohrofen in Richtung der letzten Vorwärmstufe des Vorwärmers einer Zementanlage verläuft. Beispielsweise ist die Leitung vollständig als Steigleitung ausgebildet. Die Steigleitung ist vorzugsweise derart ausgebildet, dass sie in im Wesentlichen vertikaler Richtung von unten nach oben von Heißgasen durchströmbar ist. Unter der Behandlung von Brennstoffen wird beispielsweise die Trocknung, Verbrennung, zumindest teilweise Entgasung und/oder die zumindest teilweise Umsetzung des Brennstoffes verstanden. Bei den Brennstoffen handelt es sich beispielsweise um Haushalts-, Industrie- und/oder Gewerbeabfälle, die vorzugsweise grobstückig sind. Weiterhin zählen sowohl flüssige, pastöse wie auch feste Abfälle und Biomassen, die für die energetische Verwertung/Mitverbrennung geeignet sind, dazu, welche endkonfektioniert energetisch verwertet werden. Die Brennstoffe umfassen ferner beispielsweise Lösemittel, Altöl, ganze oder geschredderte Altreifen sowie getrockneter Klärschlamm, Reishülsen, Stroh oder gar Tiermehl. Anorganische und inerte Bestandteile sind insbesondere ebenfalls enthalten.

Der Behandlungsbereich umfasst beispielsweise eine Brennkammer zur wenigstens teilweisen thermischen Behandlung des Brennstoffs. Der Behandlungsbereich umfasst insbesondere einen Bereich, der strömungstechnisch zumindest teilweise von der Leitung getrennt angeordnet ist, sodass die die Leitung durchströmenden Heißgase den Behandlungsbereich nicht oder zumindest nicht vollständig durchströmen. In dem Bereich ergibt sich insbesondere eine Änderung der Hauptströmungsrichtung der Leitung. Der Behandlungsbereich und die Leitung sind derart miteinander verbunden, dass die im Behandlungsbereich durch die wenigstens teilweise Umsetzung des Brennstoffes erzeugten Heißgase zumindest teilweise in die Leitung strömen. Vorzugsweise treten die Brennstoffe, insbesondere Feststoffe, aus dem Behandlungsbereich zumindest teilweise in die Leitung ein. Die im Behandlungsbereich erzeugte Wärme, insbesondere Heißgase und die Wärme aus der weiteren Umsetzung des Brennstoffs auch innerhalb der Leitung bewirken insbesondere die Entsäuerung, des Rohmehls.

Optional wird der Steigleitung über ein Mittel, insbesondere eine Rohrleitung, Verbrennungsluft, wie beispielsweise Kühlerabluft, zugeführt. Die Verbrennungsluft wird insbesondere an einer Position in Strömungsrichtung des Heißgases stromabwärts des Behandlungsbereichs in die Steigleitung eingeführt.

Der Behandlungsbereich ist vorzugsweise zumindest teilweise oder vollständig umfangsmäßig um die Leitung angebracht und insbesondere als Ring ausgebildet. Der Behandlungsbereich ist beispielsweise als radiale Ausbuchtung der Leitung ausgebildet. Der Behandlungsbereich weist vorzugsweise einen Brennraum auf, der in die Leitung mündet und in welchem der Brennstoff zumindest teilweise verbrannt wird. Innerhalb des Behandlungsbereichs, vorzugsweise innerhalb des Brennraums, ist insbesondere ein Brenner angeordnet. Der Brenner ist beispielsweise an der radial nach außen weisenden Rückwand des Behandlungsbereichs, vorzugsweise oberhalb oder auf gleicher Höhe des Brennstoffeinlasses angeordnet. Der Behandlungsbereich des Brennstoffs ist vorzugsweise derart an die Leitung angebracht, dass zumindest ein Teil der mit dem Rohmaterial vermischten Heißgase in den Behandlungsbereich gelangt und dort mit dem Brennstoff in Kontakt kommt, der dadurch getrocknet und/oder zumindest teilweise entgast und/oder zumindest teilweise umgesetzt wird. Der Behandlungsbereich weist vorzugsweise eine Auflagefläche zur Aufnahme des Brennstoffs auf, wobei der Brennstoff insbesondere mittels Schwerkraft, pneumatisch oder mechanisch entlang der Auflagefläche bewegbar ist. Vorzugsweise weist die Anlage zumindest eine Transportvorrichtung, wie beispielsweise eine Förderschnecke, zum Transportieren des Brennstoffs in den Behandlungsbereich auf.

Das sauerstoffreiche Gas wird vorzugsweise über eine Sauerstoffleitung insbesondere direkt in den Behandlungsbereich eingeführt. Bei dem sauerstoffreichen Gas handelt es sich beispielsweise um Luft, mit Sauerstoff angereicherte Luft oder reinen Sauerstoff. Die Sauerstoffleitung mündet vorzugsweise in den Behandlungsbereich, sodass vorzugsweise zusätzlich zu der Kühlerabluft sauerstoffreiches Gas in den Behandlungsbereich und anschließend in die Steigleitung eingeleitet wird. Bei dem sauerstoffreichen Gas handelt es sich beispielsweise um Kühlerabluft, Umgebungsluft, Bypassgas aus einem Ofenbypass oder reinen Sauerstoff. Der Sauerstoffgehalt des sauerstoffreichen Gases beträgt beispielsweise 21% bis 100%, vorzugsweise mindestens 30% bis 50%. Insbesondere weist die Sauerstoffleitung eine Dosiereinrichtung zur Dosierung der Menge an Sauerstoff, insbesondere an sauerstoffreichem Gas, in den Behandlungsbereich auf. Bei der Dosiereinrichtung handelt es sich beispielsweise um eine Klappe oder ein Ventil, die vorzugsweise stufenlos einstellbar ist. Die Sauerstoffleitung ist vorzugsweise an der radial nach außen weisenden Außenwand des Behandlungsbereichs angeordnet und mündet beispielsweise oberhalb der Brennstoffzufuhr und insbesondere oberhalb des Brenners in den Behandlungsbereich.

Eine Steuerung/ Regelung der Menge an Sauerstoff, insbesondere sauerstoffhaltigem Gas, in den Behandlungsbereich, ermöglicht auf einfache Weise eine Einstellung der thermischen Leistung des Calcinators. Die Verbrennung innerhalb des Brennraums kann über eine solche Steuerung/ Regelung an die Betriebsbedingungen des Calcinators angepasst werden, sodass der Calcinator ein breites Einsatzspektrum hinsichtlich des Einsatzes von Brennstoffen und Brennstellen aufweist.

Gemäß einer ersten Ausführungsform wird der Sauerstoffgehalt in dem Heißgas stromabwärts des Behandlungsbereichs ermittelt. Beispielsweise ist eine Sauerstoffmesseinrichtung in der Leitung oder in dem Vorwärmer angebracht. Der Sauerstoffgehalt des Heißgases stromabwärts des Behandlungsbereichs, insbesondere der Brennkammer ermöglicht eine Analyse der Verbrennung innerhalb des Behandlungsbereichs und eine entsprechende Steuerung/ Regelung der Sauerstoffzuführung in den Behandlungsbereich.

Gemäß einer weiteren Ausführungsform wird die Temperatur innerhalb des Behandlungsbereichs und/oder der Leitung ermittelt. Die Temperaturmesseinrichtung ist vorzugsweise stromabwärts oder innerhalb des Behandlungsbereichs angebracht.

Erfindungsgemäß wird der ermittelte Sauerstoffgehalt mit einem Sauerstoffgehalt-Sollwert verglichen und bei einer Abweichung des ermittelten Sauerstoffgehalts von dem Sauerstoff-Sollwert wird die Menge an in den Behandlungsbereich eingeleiteten Sauerstoff erhöht und/ oder Brennstoff erhöht oder verringert. Bei dem Sollwert kann es sich auch um einen Sollwertbereich handeln.

Erfindungsgemäß wird die Menge an in den Behandlungsbereich eingeleiteter Sauerstoff erhöht, wenn der ermittelte Sauerstoffgehalt den Sauerstoffgehalt-Sollwert überschreitet. Bei dem Sollwert handelt es sich um eine Sauerstoffkonzentration zwischen 0 % und 6 %, insbesondere 2% bis 5%.

Es ist ebenfalls denkbar, den ermittelten Sauerstoffgehalt mit zumindest zwei unterschiedlichen Sollwerten, insbesondere Grenzwerten, zu vergleichen. Insbesondere wird der ermittelte Sauerstoffgehalt mit einem maximalen Sauerstoffgehalt-Sollwert verglichen. Die Menge an in den Behandlungsbereich eingeleiteten Sauerstoff wird erfindungsgemäß erhöht, wenn der ermittelte Sauerstoffgehalt den insbesondere maximalen Sauerstoffgehalt-Sollwert überschreitet. Der ermittelte Sauerstoffgehalt wird vorzugsweise mit einem minimalen Sauerstoffgehalt-Sollwert verglichen. Die Menge an in den Behandlungsbereich eingeleiteten Sauerstoff wird verringert, wenn der ermittelte Sauerstoffgehalt den insbesondere minimalen Sauerstoffgehalt-Sollwert überschreitet.

Gemäß einer Erkenntnis der Erfinder lässt ein geringer Sauerstoffgehalt in dem Heißgas stromabwärts des Behandlungsbereichs auf eine zu stark eingestellte Verbrennung innerhalb des Behandlungsbereichs schließen, sodass bei einem geringen Sauerstoffgehalt, die Sauerstoffzufuhr in den Behandlungsbereich verringert und bei einem hohen Sauerstoffgehalt die Sauerstoffzufuhr in den Behandlungsbereich erhöht wird.

Gemäß einer weiteren Ausführungsform wird die ermittelte Temperatur mit einem Temperatur-Sollwert verglichen und bei einer Abweichung der ermittelten Temperatur von dem Temperatur-Sollwert die Menge an in den Behandlungsbereich eingeleiteter Sauerstoff und/ oder Brennstoff und/ oder die Menge an über den Brenner eingeleiteter zündfähiger Brennstoff erhöht oder verringert wird. Bei einem solchen Sollwert handelt es sich um eine Temperatur zwischen 750 °C und 1050 °C, insbesondere 850°C bis 1000°C.

Es ist ebenfalls denkbar, die ermittelte Temperatur mit zumindest zwei unterschiedlichen Sollwerten, insbesondere Grenzwerten, zu vergleichen. Insbesondere wird die ermittelte Temperatur mit einem maximalen Temperatur-Sollwert verglichen. Die Menge an in den Behandlungsbereich eingeleiteter Sauerstoff oder Brennstoff wird verringert, wenn die ermittelte Temperatur den maximalen Temperatur -Sollwert überschreitet. Die ermittelte Temperatur wird vorzugsweise mit einem minimalen Temperatur -Sollwert verglichen. Die Menge an in den Behandlungsbereich eingeleiteter Sauerstoff oder Brennstoff wird erhöht, wenn die ermittelte Temperatur den minimalen Temperatur-Sollwert unterschreitet.

Gemäß einer weiteren Ausführungsform wird der Heizwert des Brennstoffs ermittelt und die Menge an in den Behandlungsbereich eingeleiteter Sauerstoff und/ oder Brennstoff in Abhängigkeit des ermittelten Heizwerts gesteuert/ geregelt. Der Heizwert umfasst vorzugsweise den Brennwert, die Brennstofffeuchte und/ oder den Entwässerungsgrad des Brennstoffs. Der Heizwert, insbesondere der Brennwert, die Brennstofffeuchte und/ oder der Entwässerungsgrad des Brennstoffs, wird vorzugsweise mittels Nahinfrarotspektroskopie (NIR) über eine NIR-Messeinrichtung ermittelt. Die NIR-Messeinrichtung ist vorzugsweise außerhalb des Behandlungsbereichs derart angeordnet, dass sie den Brennstoff vor dem Eintritt in den Behandlungsbereich hinsichtlich des Brennwerts, der Brennstofffeuchte und/ oder dem Entwässerungsgrad analysiert. Die NIR-Messeinrichtung ist vorzugsweise zur Übermittlung der ermittelten Daten wie Brennwert, Brennstofffeuchte und/ oder des Entwässerungsgrad des Brennstoffs mit der Steuerungs-/Regelungseinrichtung verbunden.

Beispielsweise umfasst die Erfindung ein Verfahren zur Herstellung von Zement, insbesondere Zementklinker, wobei Rohmehl in einem Vorwärmer erwärmt, in einem Ofen, insbesondere einem Drehrohrofen gebrannt und anschließenden in einem Kühler gekühlt wird. Vorzugsweise wird das in dem Vorwärmer erwärmte Rohmehl beispielsweise gemäß dem vorangehend beschriebenen Verfahren thermisch behandelt wird.

Eine Anlage (nicht erfindungsgemäß) zur thermischen Behandlung von flugfähigem Rohmaterial, insbesondere Zementrohmehl und/oder mineralische Produkte, zur Durchführung des erfindungsgemäßen Verfahrens kann aufweisen eine von Heißgasen durchströmbaren Leitung und zumindest einem Mittel zur Zugabe des Rohmaterials in die Leitung, und einen Behandlungsbereich zur thermischen Behandlung von Brennstoffen, der mit der Leitung in Verbindung steht, sodass zumindest ein Teil der in dem Behandlungsbereich erzeugten Wärme in die Leitung gelangt, und
eine in den Behandlungsbereich mündende Sauerstoffleitung zur Leitung von sauerstoffreichem Gas. Die Anlage weist eine Temperaturmesseinrichtung zur Ermittlung der Gastemperatur und/ oder eine Sauerstoffmesseinrichtung zur Ermittlung des Sauerstoffgehalts des Heißgases auf. Des Weiteren weist die Anlage eine Steuerungs-/Regelungseinrichtung auf, die derart ausgebildet ist, dass sie die Menge an über die Sauerstoffleitung in den Behandlungsbereich eingeleiteten Sauerstoff in Abhängigkeit der ermittelten Temperatur und/ oder des ermittelten Sauerstoffgehalts steuert/ regelt.

Die mit Bezug auf das Verfahren beschriebenen Vorteile und Ausführungen treffen in vorrichtungsgemäßer Entsprechung ebenfalls auf die Anlage zur thermischen Behandlung von flugfähigem Rohmaterial zu.

Die Steuerungs-/Regelungseinrichtung ist vorzugsweise mit der Dosiereinrichtung zur Steuerung/ Regelung der Dosierung von sauerstoffhaltigem Gas in den Behandlungsbereich verbunden.

Gemäß einer weiteren Ausführungsform ist die Sauerstoffmesseinrichtung stromabwärts des Behandlungsbereichs angebracht. Der Sauerstoffgehalt wird vorzugsweise kontinuierlich ermittelt.

Gemäß einer weiteren Ausführungsform ist die Temperaturmesseinrichtung innerhalb des Behandlungsbereichs oder in der Leitung angebracht.

Gemäß einer weiteren Ausführungsform ist die Steuerungs-/Regelungseinrichtung derart ausgebildet, dass sie den ermittelten Sauerstoffgehalt mit einem Sauerstoffgehalt-Sollwert vergleicht und bei einer Abweichung des ermittelten Sauerstoffgehalts von dem Sauerstoff-Sollwert die Menge an in den Behandlungsbereich eingeleiteter Sauerstoff erhöht oder verringert.

Gemäß einer weiteren Ausführungsform ist die Steuerungs-/Regelungseinrichtung derart ausgebildet, dass sie die Menge an in den Behandlungsbereich eingeleiteten Sauerstoff erhöht, wenn der ermittelte Sauerstoffgehalt den Sauerstoffgehalt-Sollwert überschreitet.

Gemäß einer weiteren Ausführungsform ist die Steuerungs-/Regelungseinrichtung derart ausgebildet, dass sie die ermittelte Temperatur mit einem Temperatur-Sollwert vergleicht und bei einer Abweichung der ermittelten Temperatur von dem Temperatur-Sollwert die Menge an in den Behandlungsbereich eingeleiteten Sauerstoff und/ oder die Menge an über den Brenner eingeleiteten zündfähigen Brennstoff erhöht oder verringert.

Vorzugsweise ist der Brenner mit einer Brennstoffleitung zur Leitung von vorzugsweise leicht zündfähigem, insbesondere flüssigem Brennstoff in die Brennkammer verbunden. Bei dem Brenner handelt es sich beispielsweise um eine Brennerlanze über welche der flüssige Brennstoff in die Brennkammer aufgegeben und insbesondere gezündet wird. Optional ist die Sauerstoffleitung mit dem Brenner verbunden, wobei dieser oberhalb der Brennstoffzufuhr angeordnet ist und bei Überschreiten des Sauerstoffsollwerts oder bei Unterschreiten der Temperatur in dem Behandlungsbereich durch Zugabe von leicht zündfähigem Brennstoff und eingeleitetem Sauerstoff die Verbrennungsbedingungen im Behandlungsbereich sicherstellt.

Die Sauerstoffleitung und eine Brennerzuführung, die als Lanze ausgeführt sein kann, ist optional an den Behandlungsbereich angeschlossen, die beide oberhalb des Einleitung der Brennstoffzufuhr angeordnet sind und bei Überschreiten des Sauerstoffsollwerts oder bei Unterschreiten der Temperatur in dem Behandlungsbereich durch Zugabe von leicht zündfähigem Brennstoff und eingeleitetem Sauerstoff die Verbrennungsbedingungen im Behandlungsbereich sicherstellen.

Gemäß einer weiteren Ausführungsform weist die Anlage eine Einrichtung zur Ermittlung des Heizwertes des Brennstoffs auf, die mit der Steuerungs-/Regelungseinrichtung zur Übermittlung des ermittelten Heizwertes verbunden ist und wobei die Steuerungs-/Regelungseinrichtung derart ausgebildet ist, dass sie die die Menge an über die Sauerstoffleitung in den Behandlungsbereich eingeleiteten Sauerstoff und/ oder Brennstoff in Abhängigkeit des ermittelten Heizwertes steuert/ regelt.

Beschrieben wird (nicht erfindungsgemäß) beispielsweise eine Anlage zur Herstellung von Zement, insbesondere Zementklinker, aufweisend einen Vorwärmer, eine Anlage zur thermischen Behandlung von flugfähigem Rohmaterial, wie vorangehend beschrieben, einen Ofen, insbesondere einen Drehrohrofen und einen Kühler.

### Beschreibung der Zeichnungen

Die Erfindung ist nachfolgend anhand mehrerer Ausführungsbeispiele mit Bezug auf die beiliegenden Figuren näher erläutert.
Fig. 1 zeigt eine schematische Ansicht einer Anlage zur Herstellung von Zementklinker gemäß einem Ausführungsbeispiel (nicht erfindungsgemäß).
Fig. 2 zeigt eine schematische Ansicht einer Anlage zur thermischen Behandlung von flugfähigem Rohmaterial gemäß einem Ausführungsbeispiel (nicht erfindungsgemäß).

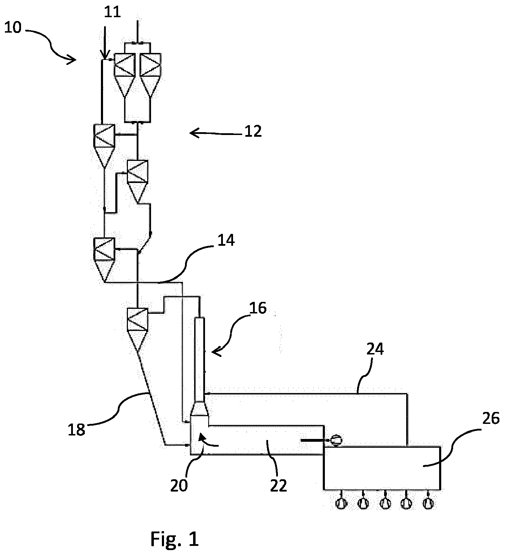

Fig. 1 zeigt eine Anlage zur Herstellung von beispielsweise Zementklinker mit einem mehrstufigen Vorwärmer 12 zum Vorwärmen von Zementrohmehl 11, einem Calcinator 16 zum Vorcalcinieren des vorgewärmten Zementrohmehls 14, einen Ofen 22 zum Brennen des vorcalcinierten Zementrohmehls 18 zu Zementklinker und einen Kühler 26 zum Kühlen des Zementklinkers. Die im Ofen 22 entstehenden Heißgase 20 durchströmen zunächst den Calcinator 16 und anschließend den Vorwärmer 12. Ferner wird eine im Kühler 22 entstehende Kühlerabluft 24 als Verbrennungsluft im Calcinator 16 genutzt.

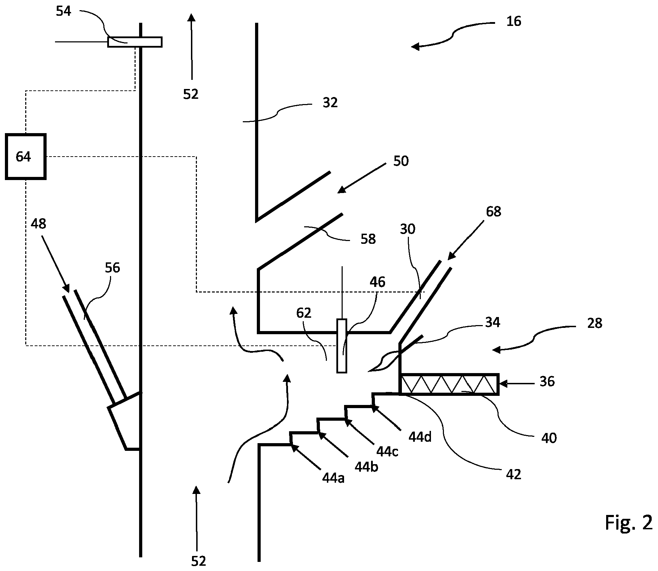

Anhand der Figur 2 wird ein Ausführungsbeispiel (nicht erfindungsgemäß) für die Ausbildung des Calcinators 16 gezeigt. Dieses Ausführungsbeispiel kann auch weitere Anlagen zur thermischen Behandlung oder chemischen Umsetzung von flugfähigem Rohmaterial, wie beispielsweise der Erzreduktion, betreffen und ist daher nicht auf einen Calcinator und oder Ofenlinie zur Herstellung von Zementklinker beschränkt.

Fig. 2 zeigt eine Anlage 16 zur thermischen Behandlung eines flugfähigen Rohmaterials, insbesondere einen Calcinator 16. Die Anlage weist ein sich im Wesentlichen vertikal erstreckende Leitung 32 auf, an der ein Behandlungsbereich 28 angebracht ist. Es ist ebenfalls denkbar, dass mehr als ein Behandlungsbereich 28, beispielsweise zwei oder drei Behandlungsbereiche, an der Leitung 32 angebracht sind, wobei diese beispielsweise im Wesentlichen identisch ausgebildet sind. Der Behandlungsbereich 28 bildet eine radiale Ausbuchtung, insbesondere Erweiterung der Leitung 32 und weist einen Brennraum 62 auf, der jeweils hin zu der Leitung 32 offen ausgebildet ist und in das Innere der Leitung 32 mündet. Der Behandlungsbereich 28 weist eine im Wesentlichen horizontale Auflagefläche 42 auf, die beispielhaft durch einen Tisch und vier sich in Richtung der Leitung 32 anschließende Stufen gebildet wird. Weiterhin sind Mittel zur Zugabe von Brennstoff 36 vorgesehen, die im dargestellten Ausführungsbeispiel beispielhaft Pendelklappen und/ oder eine Förderschnecke 40 umfassen. Der Brennstoff 36 wird vorzugsweise über einen Brennstoffeinlass in den Behandlungsbereich 28 eingeführt, wobei der Brennstoffeinlass vorzugsweise auf gleicher Höhe oder oberhalb der Auflagefläche 42 und insbesondere in der radial nach außen weisenden Rückwand des Behandlungsbereichs 28 angeordnet ist.

Über die Mittel zur Zugabe des Brennstoffs 36 wird der Brennstoff 36 auf die Auflagefläche 42 geschoben. Das thermisch zu behandelnde Rohmaterial 48 wird in einem unteren Bereich der Leitung 32 über die Mittel 56, insbesondere über eine Leitung, zugeführt. Weiterhin kann der Leitung 32 über Mittel 58, insbesondere eine Leitung, sauerstoffhaltige Verbrennungsluft 50 zugeführt werden. Die sauerstoffhaltige Verbrennungsluft ist beispielswiese Kühlerabluft 24 gemäß Fig. 1 oder mit Sauerstoff angereicherte Luft. In dem Behandlungsbereich 28 ist insbesondere ein Brenner 34 angeordnet. Vorzugsweise ist der Brenner 34 in dem hinteren, radial nach außen weisenden Bereich des Behandlungsbereichs 28 und vorzugsweise oberhalb des Brennstoffeinlasses angebracht. Das Mittel 58 zur Zuführung von sauerstoffhaltiger Verbrennungsluft ist beispielhaft in Strömungsrichtung des Heißgases 52 stromabwärts des Behandlungsbereichs 28 angeordnet.

Zusätzlich zu dem Mittel 58 ist eine Sauerstoffleitung 30 zur Leitung von sauerstoffreichem Gas 68, wie beispielsweise Luft, mit Sauerstoff angereicherte Luft oder reiner Sauerstoff in den Behandlungsbereich 28 anzuordnen, sodass zusätzlich zu der Kühlerabluft 24 sauerstoffreiches Gas in den Behandlungsbereich 28 eingeleitet wird. Bei dem sauerstoffreichen Gas handelt es sich beispielsweise um Kühlerabluft, Umgebungsluft, Bypassgas aus einem Ofenbypass oder reinen Sauerstoff. Der Sauerstoffgehalt des sauerstoffreichen Gases 68 beträgt beispielsweise 21% bis 100%, vorzugsweise mindestens 30% bis 50%. Insbesondere weist die Sauerstoffleitung 30 eine in Fig. 2 nicht dargestellte Dosiereinrichtung zur Dosierung der Menge an Sauerstoff, insbesondere an sauerstoffreichem Gas 68, in den Behandlungsbereich 28 auf. Die Sauerstoffleitung 30 ist vorzugsweise an der radial nach außen weisenden Außenwand des Behandlungsbereichs 28 angeordnet und mündet beispielsweise oberhalb der Brennstoffzufuhr und insbesondere oberhalb des Brenners 34 in den Behandlungsbereich 28. In einer weiteren Ausführung kann das sauerstoffreiche Gas auch über den Brenner 34 in den Behandlungsbereich 28 eingeleitet werden. In einer weiteren Ausführung wird der Brenner 34 mit zündfähigem, feinkörnigem festem, flüssigem oder gasförmigem Brennstoff betrieben. Sowohl die Sauerstoffleitung als auch die Brennstoffleitung des Brenners 34 weisen eine Dosiervorrichtung auf.

Der Brennraum 62 ist derart an die Leitung 32 angeschlossen, dass ein Teil der mit dem Rohmaterial 48 vermischten Heißgase 52 beispielsweise nach Art einer Kehrströmung in den Brennraum 62 gelangt und dort mit dem auf der Auflagefläche 42 verweilenden Brennstoff 36 in Kontakt kommt, der dadurch getrocknet und/oder teilweise entgast und/oder wenigstens teilweise umgesetzt wird. Nach einer ausreichenden Verweilzeit auf dem Tisch der Auflagefläche 42 wird der Brennstoff 36 auf die erste Stufe geschoben, indem neuer Brennstoff über die Schnecke 40 nachgeschoben wird. Zum Transport des Brennstoffs 36 von der ersten Stufe auf die sich daran anschließende Stufen bzw. zum Abwurf des Brennstoffs 36 von den Stufen in die Leitung 32 sind im Bereich der Stufen Luftstoßvorrichtungen 44a-d vorgesehen, die vorzugsweise zur pneumatischen Förderung des Brennstoffs 36 in Richtung der Leitung 32 ausgebildet sind. Es ist ebenfalls denkbar, dass alternativ oder zusätzlich Gebläse, Schieber oder Stößel zur Förderung des Brennstoffs 36 angeordnet sind. Durch eine nicht näher dargestellte Steuerung werden die Förderschnecke 40 und die Luftstoßgeräte 44a-d aufeinander abgestimmt betätigt, sodass der Brennstoff 36 eine ausreichende Zeit im Brennraum 62 verweilt und dort in der gewünschten Art und Weise wenigstens teilweise umgesetzt wird.

Der in die Leitung 32 gelangte Brennstoff 36 wird vom Heißgas 52 mitgerissen und weiter umgesetzt bzw. verbrannt. Der Effekt der "Kehrströmung", bei dem der Teil der in der Leitung 32 nach oben strömenden Heißgase 52 in den Brennraum 62 gelangt, tritt ein.

In Strömungsrichtung des Gemisches aus Heißgas 52 und Rohmaterial 48 vor dem Behandlungsbereich 28 ist das Mittel 56 zur Zuführung von Rohmaterial 48 angeordnet. Bei den Mitteln 56 handelt es sich beispielsweise um eine Rohrleitung, die in die Steigleitung 32 mündet und beispielsweise mit einer Klappe zum Verhindern oder Dosieren der Luft- bzw. Materialströmung in die Leitung 32 versehen sind.

Stromabwärts des Behandlungsbereichs 28 ist eine Messeinrichtung 54 in dem Inneren der Leitung 32 angebracht. Es ist ebenfalls denkbar, dass die Messeinrichtung 54 in dem Vorwärmer 12 angeordnet ist, sodass eine Messung in der Leitung 32 nicht zwingend erforderlich ist. Die Messeinrichtung 54 ist zum Ermitteln des Sauerstoffgehalts in dem Heißgas 52 ausgebildet. Insbesondere ermittelt die Messeinrichtung 54 den Sauerstoffgehalt in dem Heißgasstrom stromabwärts des Behandlungsbereichs 28. Vorzugsweise ist die Messeinrichtung 54 zur kontinuierlichen Ermittlung des Sauerstoffgehalts in dem Heißgas 52 ausgebildet.

In dem Behandlungsbereich 28 ist vorzugsweise eine Temperaturmesseinrichtung 46 angebracht und insbesondere zur Ermittlung der Temperatur innerhalb des Behandlungsbereichs 28 ausgebildet. Die Anlage 16 weist des Weiteren eine Steuerungs-/ Regelungseinrichtung 64 auf, die mit der Sauerstoffmesseinrichtung 54 und der Temperaturmesseinrichtung 46 derart verbunden ist, dass die Sauerstoffmesseinrichtung 54 den ermittelten Sauerstoffgehalt und die Temperaturmesseinrichtung 46 die ermittelte Temperatur an die Steuerungs-/ Regelungseinrichtung 64 übermittelt. Es ist ebenfalls denkbar, dass die Steuerungs-/ Regelungseinrichtung 64 lediglich mit einer Messeinrichtung 46, 54, der Temperaturmesseinrichtung 46 oder der Sauerstoffmesseinrichtung 54 verbunden ist. Die Steuerungs-/ Regelungseinrichtung 64 ist des Weiteren vorzugsweise mit der Sauerstoffleitung 30, insbesondere mit der Dosiereinrichtung zur Dosierung von Sauerstoff in den Behandlungsbereich 28 verbunden. Die Dosierungseinrichtung ist vorzugsweise innerhalb der Sauerstoffleitung 30 angeordnet oder mit dieser verbunden. In einer weiteren Ausführung ist die Steuerungs-/ Regelungseinrichtung 64 des Weiteren vorzugsweise mit der Brennstoffleitung des Brenners 34, insbesondere mit der Dosiereinrichtung zur Dosierung von zündfähigem Brennstoff in den Behandlungsbereich 28 verbunden.

Des Weiteren weist die Anlage 16 optional eine nicht dargestellte Einrichtung zur Ermittlung des Heizwertes des Brennstoffs 36, insbesondere der Brennstofffeuchte und/ oder des Entwässerungsgrad des Brennstoffs, auf. Bei der Einrichtung handelt es sich beispielsweise um eine NIR-Messeinrichtung, die mittel Nahinfrarotspektroskopie die Brennstofffeuchte und/ oder den Entwässerungsgrad des Brennstoffs ermittelt. Die Einrichtung zur Ermittlung des Heizwertes des Brennstoffs 36 ist vorzugsweise mit der Steuerungs-/ Regelungseinrichtung 64 zur Übermittlung des ermittelten Heizwertes verbunden.

Im Betrieb der Anlage 16 zur thermischen Behandlung von flugfähigem Rohmaterial 48 durchströmt das Gemisch aus Heißgas 52 und Rohmaterial die Leitung 32 von unten nach oben. Die mittels des Behandlungsbereichs 28 über die Steigung der Leitung 32 aufrecht erhaltene Temperatur von etwa 500 - 1300°C, vorzugsweise 800-1200°C, sorgt für eine Entsäuerung des Rohmaterials. Die Steuerungs-/ Regelungseinrichtung 64 dient vorzugsweise der Einstellung einer im Wesentlichen konstanten thermischen Leistung der Anlage 16.

Die Steuerungs-/Regelungseinrichtung 64 ist insbesondere derart ausgebildet, dass sie den ermittelten Sauerstoffgehalt mit einem Sauerstoffgehalt-Sollwert vergleicht und bei einer Abweichung des ermittelten Sauerstoffgehalts von dem Sauerstoff-Sollwert die Menge an in den Behandlungsbereich 28 eingeleiteter Sauerstoff erhöht oder verringert. Es ist ebenfalls denkbar, den ermittelten Sauerstoffgehalt mit zumindest zwei unterschiedlichen Sollwerten, insbesondere Grenzwerten, zu vergleichen. Insbesondere wird der ermittelte Sauerstoffgehalt mit einem maximalen Sauerstoffgehalt-Sollwert verglichen. Die Menge an in den Behandlungsbereich 28 eingeleiteten Sauerstoff wird erhöht, wenn der ermittelte Sauerstoffgehalt den maximalen Sauerstoffgehalt-Sollwert überschreitet. Der ermittelte Sauerstoffgehalt wird vorzugsweise mit einem minimalen Sauerstoffgehalt-Sollwert verglichen. Die Menge an in den Behandlungsbereich 28 eingeleiteten Sauerstoff wird verringert, wenn der ermittelte Sauerstoffgehalt den minimalen Sauerstoffgehalt-Sollwert überschreitet.

Die Steuerungs-/Regelungseinrichtung 64 ist insbesondere derart ausgebildet, dass sie die ermittelte Temperatur mit einem Temperatur-Sollwert vergleicht und bei einer Abweichung der ermittelten Temperatur von dem Temperatur-Sollwert die Menge an in den Behandlungsbereich 28 eingeleiteter Sauerstoff erhöht oder verringert. Es ist ebenfalls denkbar, die ermittelte Temperatur mit zumindest zwei unterschiedlichen Sollwerten, insbesondere Grenzwerten, zu vergleichen. Insbesondere wird die ermittelte Temperatur mit einem maximalen Temperatur-Sollwert verglichen. Die Menge an in den Behandlungsbereich 28 eingeleiteten Sauerstoff wird verringert, wenn die ermittelte Temperatur den maximalen Temperatur -Sollwert überschreitet. Die ermittelte Temperatur wird vorzugsweise mit einem minimalen Temperatur -Sollwert verglichen. Die Menge an in den Behandlungsbereich 28 eingeleiteten Sauerstoff wird erhöht, wenn die ermittelte Temperatur den minimalen Temperatur-Sollwert unterschreitet.

Die Steuerungs-/Regelungseinrichtung 64 ist optional derart ausgebildet, dass sie den ermittelten Heizwert mit einem Heizwert -Sollwert vergleicht und bei einer Abweichung des ermittelten Heizwerts von dem Heizwert-Sollwert die Menge an in den Behandlungsbereich 28 eingeleiteter Sauerstoff und/oder Brennstoff erhöht oder verringert. Es ist ebenfalls denkbar, den ermittelten Heizwert mit zumindest zwei unterschiedlichen Sollwerten, insbesondere Grenzwerten, zu vergleichen. Insbesondere wird der ermittelte Heizwert mit einem maximalen Heizwert-Sollwert verglichen. Die Menge an in den Behandlungsbereich 28 eingeleiteten Sauerstoff und/ oder Brennstoff wird verringert, wenn der ermittelte Heizwert den maximalen Heizwert-Sollwert überschreitet. Der ermittelte Heizwert wird vorzugsweise mit einem minimalen Heizwert-Sollwert verglichen. Die Menge an in den Behandlungsbereich 28 eingeleiteten Sauerstoff und/ oder Brennstoff wird erhöht, wenn der ermittelte Heizwert den minimalen Heizwert-Sollwert unterschreitet.

### Bezugszeichenliste

- 10: Anlage zur Herstellung von Zementklinker
- 11: Zementrohmehl
- 12: Vorwärmer
- 14: vorgewärmtes Rohmaterial
- 16: Calcinator
- 18: vorcalciniertes Rohmaterial
- 20: Heißgase des Drehrohrofens
- 22: Drehrohrofen
- 24: Kühlerabluft
- 26: Kühler
- 28: Behandlungsbereich
- 30: Sauerstoffleitung
- 32: Leitung
- 34: Brenner
- 36: Brennstoff
- 38: Mittel zur Zugabe von Brennstoff
- 40: Transportschnecke
- 42: Auflagefläche
- 44a-d: Luftstoßvorrichtung
- 46: Temperaturmesseinrichtung
- 48: vorgewärmtes Rohmaterial
- 50: sauerstoffhaltige Verbrennungsluft / Kühlerabluft
- 52: Heißgas
- 54: Sauerstoffmesseinrichtung
- 56: Mittel zur Zuführung von Rohmaterial
- 58: Mittel zur Zuführung von sauerstoffhaltiger Verbrennungsluft
- 60: Mittel zur Zugabe von Brennstoff
- 62: Brennraum
- 64: Steuerungs-/Regelungseinrichtung
- 66: Temperaturmesseinrichtung
- 68: sauerstoffreiches Gas

## Patentansprüche

1. Verfahren zur thermischen Behandlung von flugfähigem Rohmaterial (48), insbesondere Zementrohmehl (11) und/oder mineralische Produkte, zur Herstellung von Zementklinker, wobei das Rohmaterial (48) in eine von heißen Gasen durchströmte Leitung (32) eingeführt und durch die Heißgase (52) und/oder die Strahlungswärme in der Leitung (32) thermisch behandelt wird, wobei die Leitung (32) eine Steigleitung ist,
Brennstoff (36) in einem Behandlungsbereich (28) wenigstens teilweise umgesetzt wird und die in dem Behandlungsbereich (28) erzeugte Wärme zumindest teilweise der Leitung (32) zugeführt wird, wobei der Behandlungsbereich (28) und die Leitung (32) derart miteinander verbunden sind, dass die im Behandlungsbereich (28) durch die wenigstens teilweise Umsetzung des Brennstoffes erzeugten Heißgase zumindest teilweise in die Leitung (32) strömen, und
ein sauerstoffreiches Gas (68) in den Behandlungsbereich (28) eingeleitet wird,
**dadurch gekennzeichnet, dass**
der Sauerstoffgehalt in dem Heißgas (52) ermittelt wird und
die Menge an in den Behandlungsbereich (28) eingeleiteter Sauerstoff in Abhängig des ermittelten Sauerstoffgehalts gesteuert/ geregelt wird,
wobei der ermittelte Sauerstoffgehalt mit einem Sauerstoffgehalt-Sollwert verglichen und die Menge an in den Behandlungsbereich (28) eingeleiteter Sauerstoff erhöht wird, wenn der ermittelte Sauerstoffgehalt den Sauerstoffgehalt-Sollwert überschreitet, wobei der Sauerstoffgehalt-Sollwert eine Sauerstoffkonzentration zwischen 0 % und 6 % ist.

2. Verfahren nach Anspruch 1, wobei der Sauerstoffgehalt in dem Heißgas (52) in Strömungsrichtung des Heißgases stromabwärts des Behandlungsbereichs (28) ermittelt wird.

3. Verfahren nach einem der vorangehenden Ansprüche, wobei die Gastemperatur innerhalb des Behandlungsbereichs (28) oder der Leitung (32) ermittelt wird und wobei die Menge an in den Behandlungsbereich (28) eingeleiteter Sauerstoff in Abhängig der ermittelten Temperatur gesteuert/ geregelt wird.

4. Verfahren nach Anspruch 3, wobei die ermittelte Temperatur mit einem Temperatur-Sollwert verglichen wird und bei einer Abweichung der ermittelten Temperatur von dem Temperatur-Sollwert die Menge an in den Behandlungsbereich (28) eingeleiteter Sauerstoff und/ oder und die Menge an über den Brenner (34) eingeleiteten zündfähigen Brennstoff erhöht oder verringert wird, wobei der Temperatur-Sollwert eine Temperatur zwischen 750 °C und 1050 °C ist.

5. Verfahren nach einem der vorangehenden Ansprüche, wobei der Heizwert des Brennstoffs (36) ermittelt wird und die Menge an in den Behandlungsbereich (28) eingeleiteten Sauerstoff und/ oder Brennstoff (36) in Abhängig des ermittelten Heizwerts gesteuert/ geregelt wird.

## Claims

1. Process for the thermal treatment of flyable raw material (48), in particular cement raw meal (11) and/or mineral products, for the production of cement clinker, the raw material (48) being introduced into a conduit (32) through which hot gases flow and being thermally treated by the hot gases (52) and/or the radiant heat in the conduit (32), the conduit (32) being a riser conduit,
fuel (36) is at least partially converted in a treatment area (28) and the heat generated in the treatment area (28) is at least partially supplied to the conduit (32), the treatment area (28) and the conduit (32) being connected to each other such that the hot gases generated in the treatment area (28) by the at least partial conversion of the fuel flow at least partially into the conduit (32), and
an oxygen-rich gas (68) is introduced into the treatment region (28),
**characterized in that**
the oxygen content in the hot gas (52) is determined, and
the amount of oxygen introduced into the treatment area (28) is controlled/regulated in dependence on the determined oxygen content,
wherein the determined oxygen content is compared to an oxygen content setpoint and the amount of oxygen introduced into the treatment area (28) is increased if the determined oxygen content exceeds the oxygen content setpoint, wherein the oxygen content setpoint is an oxygen concentration between 0% and 6%.

2. The method according to claim 1, wherein the oxygen content in the hot gas (52) is determined downstream of the treatment area (28) in the flow direction of the hot gas.

3. Method according to any of the preceding claims, wherein the gas temperature within the treatment area (28) or the line (32) is determined and wherein the amount of oxygen introduced into the treatment area (28) is controlled/regulated in dependence on the determined temperature.

4. Method according to claim 3, wherein the determined temperature is compared with a temperature setpoint and, in the event of a deviation of the determined temperature from the temperature setpoint, the quantity of oxygen introduced into the treatment region (28) and/or and the quantity of ignitable fuel introduced via the burner (34) is increased or reduced, wherein the temperature setpoint is a temperature between 750 °C and 1050 °C.

5. Method according to one of the preceding claims, wherein the calorific value of the fuel (36) is determined and the amount of oxygen and/or fuel (36) introduced into the treatment area (28) is controlled/regulated in dependence on the determined calorific value.

## Revendications

1. Procédé de traitement thermique de matières premières alvéolaires (48), en particulier de farine de ciment (11) et/ou de produits minéraux, pour la production de clinker, la matière première (48) étant introduite dans un conduit (32) traversé par des gaz chauds et traitée thermiquement par les gaz chauds (52) et/ou la chaleur rayonnante dans le conduit (32), le conduit (32) étant un conduit ascendant,
le combustible (36) est au moins partiellement converti dans une zone de traitement (28) et la chaleur générée dans la zone de traitement (28) est au moins partiellement fournie au conduit (32), la zone de traitement (28) et le conduit (32) étant reliés l'un à l'autre de telle sorte que les gaz chauds générés dans la zone de traitement (28) par la conversion au moins partielle du combustible s'écoulent au moins partiellement dans le conduit (32), et
un gaz riche en oxygène (68) est introduit dans la zone de traitement (28),
**caractérisé par le fait que**
la teneur en oxygène du gaz chaud (52) est déterminée, et
la quantité d'oxygène introduite dans la zone de traitement (28) est contrôlée/régulée en fonction de la teneur en oxygène déterminée,
la teneur en oxygène déterminée est comparée à une valeur de consigne de la teneur en oxygène et la quantité d'oxygène introduite dans la zone de traitement (28) est augmentée si la teneur en oxygène déterminée dépasse la valeur de consigne de la teneur en oxygène, la valeur de consigne de la teneur en oxygène étant une concentration d'oxygène comprise entre 0 % et 6 %.

2. Méthode selon la revendication 1, dans laquelle la teneur en oxygène du gaz chaud (52) est déterminée en aval de la zone de traitement (28) dans le sens d'écoulement du gaz chaud.

3. Méthode selon l'une des revendications précédentes, dans laquelle la température du gaz dans la zone de traitement (28) ou la conduite (32) est déterminée et dans laquelle la quantité d'oxygène introduite dans la zone de traitement (28) est contrôlée/régulée en fonction de la température déterminée.

4. Procédé selon la revendication 3, dans lequel la température déterminée est comparée à une consigne de température et, en cas d'écart entre la température déterminée et la consigne de température, la quantité d'oxygène introduite dans la zone de traitement (28) et/ou la quantité de combustible inflammable introduite par le brûleur (34) sont augmentées ou réduites, la consigne de température étant une température comprise entre 750 °C et 1050 °C.

5. Méthode selon l'une des revendications précédentes, dans laquelle le pouvoir calorifique du combustible (36) est déterminé et la quantité d'oxygène et/ou de combustible (36) introduite dans la zone de traitement (28) est contrôlée/régulée en fonction du pouvoir calorifique déterminé.
